# EUROPÄISCHE PATENTSCHRIFT

(11) **EP 0 971 567 B1**
(45) Veröffentlichungstag und Bekanntmachung des Hinweises auf die Patenterteilung: **17.11.2004**
(21) Anmeldenummer: 98108947.7
(22) Anmeldetag: 16.05.1998
(51) Int. Cl.: H05H 1/36

(54) **Plasmalichtbogeneinrichtung**
Plasma arc device
Dispositif de plasma d'arc

(43) Veröffentlichungstag der Anmeldung: 12.01.2000
(73) Patentinhaber: THE LINCOLN ELECTRIC COMPANY, Cleveland, Ohio 44117-1199 (US)
(72) Erfinder: Daniel, Joseph Allen, Mentor, Ohio 44060 (US)
(74) Vertreter: Hennicke, Ernst Rüdiger, Dipl.-Ing.

(56) Entgegenhaltungen:
- WO-A-90/11865
- US-A- 5 530 220
- US-A- 5 630 952

## Beschreibung

Die Erfindung betrifft eine Schaltungsanordnung für eine Plasmalichtbogeneinrichtung mit einer Elektrode und einem Düsenelement, das eine Plasmalichtbogenöffnung aufweist, durch die die Elektrode auf ein davorliegendes Werkstück gerichtet werden kann und befasst sich insbesondere mit einer Lichtbogenübertragungsschaltung für eine solche Plasmaeinrichtung. Die Erfindung ist ferner auf ein Verfahren zum Regeln einer solchen Schaltungsanordnung bzw. für den Betrieb einer Plasma-Lichtbogeneinrichtung gerichtet.

Bekannte Plasmalichtbogeneinrichtungen zum Beispiel zum Plasmaschweißen, Plasmalichtbogenschneiden oder dergleichen sind mit einer Elektrode versehen und haben eine Düse mit einer Plasmalichtbogenöffnung, durch die hindurch die Elektrode auf das davorliegende Werkstück gerichtet wird. Die bekannten Einrichtungen werden mit Gleichstrom aus einer geeigneten Stromversorgung gespeist. Ein erster Teil der Schaltung, über die die Stromquelle an dem Plasmabrenner angeschlossen ist, dient dazu, zwischen der Elektrode und der Düse einen Pilotlichtbogen zu erzeugen. Wenn der Abstand zwischen dem Werkstück und der Düse verringert wird, beginnt der am Werkstück anliegende Strom durch die zwischen Elektrode und Werkstück infolge des Pilotlichtbogens sich ausbildende, ionisierte Schicht zu fließen. Zu diesem Zeitpunkt wird der genannte erste Teil des Verbindungsschaltkreises geöffnet oder abgeklemmt und von der Stromquelle zwischen Elektrode und Werkstück ein Gleichstrom angelegt, um den Pilotlichtbogen in einen Arbeitslichtbogen zu überführen, um das Werkstück zu schneiden, zu schweißen oder anderen, mit Hilfe der Plasmaeinrichtung durchführbaren Bearbeitungen zu unterwerfen.

Es sind verschiedene Schaltungen bekannt, mit deren Hilfe der Plasmabrenner an die Stromquelle angeschlossen ist, beispielsweise aus der US-PS 5,530,220. Aus diesem älteren Patent ist es bekannt, im Pilotlichtbogenzweig des Anschlußschaltkreises einen Widerstand vorzusehen, um zwischen Werkstück und Düse eine hohe Spannung während der Pilotlichtbogenphase zu erzeugen. Die Größe des Widerstandes legt die Standardspannung zwischen Werkstück und Düse fest, die widerum ein Maß dafür ist, wie groß der Überschlag-Abstand ist, bei dem der Lichtbogen noch überspringen kann, wenn die Einrichtung aus dem Pilotlichtbogenmodus in den Betriebs- oder Schneidzustand geschaltet wird. Es sind verschiedene Anordnungen vorgeschlagen worden, um diese zur Verfügung stehende Spannung zu vergrößern und dadurch auch einen größeren Überschlagabstand zu ermöglichen. Ein derartiger Vorschlag sieht vor, in der Leitung zu der Elektrode eine Induktivität (Spule) vorzusehen, die den Strom speichert und eine induktive Entladung erzeugt, was eine hohe Spannung zur Folge hat, die zur Vergrößerung des Überschlagabstandes verwendet wird. Dieser Vorschlag zur Vergrößerung der Lichtbogen-Überschlagspannung ist in dem vorgenannten US-Patent beschrieben, das hier zur Erläuterung des technischen Hintergrundes herangezogen ist, vor dem sich die Erfindung bewegt. Diese ältere Druckschrift offenbart einen Anschlußschaltkreis mit verschiedenen Schaltungen zum Ermitteln und Regeln bzw. Steuern des Stroms und zum Umschalten zwischen dem Zündlichtbogenbetrieb und dem Bearbeitungsbetrieb der Plasmaeinrichtung.

Aus der US-A-5,630,952 ist eine Plasma-Lichtbogeneinrichtung bekannt, die eine Hauptelektrode, eine Düsenelektrode und einen Anschluß für ein Werkstück aufweist. Die Hauptelektrode ist an einen Gleichstromversorgung angeschlossen, die auch noch einen zweiten Ausgang hat. Zwischen dem zweiten Ausgang und der Düsenelektrode ist ein einen Schalter aufweisender Pilotlichtbogen-Schaltkreis eingeschaltet. Zwischen dem Werkstückanschluß und dem zweiten Ausgang ist ein Plasma-Lichtbogenschaltkreis angeordnet. Ein mit einem ersten Anschluß am Plasma-Lichtbogenschaltkreis und mit einem zweiten Anschluß am Pilotlichtbogen-Schaltkreis angeschlossener Stromdetektor erzeugt ein Signal, das dem Wert des Pilotstroms bzw. des Plasmastroms entspricht. Wenn der Pilotstrom fließt, wird der Schalter im Pilotlichtbogen-Schaltkreis von einer Regeleinheit geschlossen, die den von der Gleichstromquelle zugeführten Momentanstrom auf einen vorgegebenen Pilotstromsollwert einregelt. Wenn der Plasmastrom fließt, öffnet die Regeleinheit den Schalter und regelt dann den von der Gleichstromversorgung zugeführten, tatsächlichen Strom auf einen vorbestimmten Plasmastrom-Sollwert.

Die vorliegende Erfindung kann bei den verschiedenartigsten Plasmaeinrichtungen verwendet werden. Aus Gründen des besseren Verständnisses soll die Erfindung im folgenden lediglich im Zusammenhang mit einer Einrichtung erläutert werden, bei der die Spannung zwischen Werkstück und Elektrode mittels eines Widerstandes im Pilotlichtbogenschaltkreis gesteuert bzw. geregelt wird. Die Erfindung hat jedoch einen wesentlich breiteren Anwendungsbereich und kann praktisch bei allen Plasmalichtbogeneinrichtungen Verwendung finden, bei denen der Werkstückstrom ermittelt wird und die Schaltung, die die Stromquelle mit dem Plasmabrenner verbindet, zwischen einem Zündlichtbogenbetrieb und einem Arbeitsbetrieb hin- und herschaltet.

Es ist an sich bekannt, daß der Überschlagabstand, der durch Anheben der beim Übergang vom Pilotlichtbogenmodus zum Arbeitsmodus zur Verfügung stehenden Spannung vergrößert wird, innerhalb zulässiger Grenzen so groß wie möglich sein sollte. Die vorliegende Erfindung bezieht sich jedoch auch noch auf ein anderes Merkmal von Plasmaeinrichtungen. Die meisten solcher Systeme arbeiten nämlich mit einem vergleichsweise großen Pilotlichtbogenstrom, so daß ein größtmöglicher Überschlagabstand wegen der großen, bei der Lichtbogenübertragung zur Verfügung stehenden Spannung erreicht wird. Die Verwendung von großen Zündlichtbogenströmen hat jedoch die nachteilhafte Folge, daß die Lebensdauer der Düse vergleichsweise gering ist. Die Lebensdauer kann durch Erniedrigung des Zündlichtbogenstromes deutlich erhöht werden, was jedoch beim Betrieb des Plasmabrenners insbesondere bei automatischen Anwendungen wie zum Beispiel bei einem Roboter-SChneidbrenner den bemerkenswerten Nachteil hat, daß der Abstand, den der Lichtbogen beim Umschalten vom Pilotbetrieb auf den Schneid- bzw. Schweißbetrieb überbrücken kann, sich entsprechend verringert.

Bei einem typischen Gas-Plasmabrenner wird zwischen Stromversorgung und Brenner ein Schaltkreis vorgesehen, dessen Pilotlichtbogenzweig mit einem geregelten Strom von etwa 20 bis 30 Ampère betrieben wird. Um einen größeren Überschlag- oder Übertragungsabstand zu erreichen, kann der Strom und die Spannung zwischen Düse und Werkstück des Pilotlichtbogenschaltkreises vergrößert werden; jedoch hat die Vergrößerung des Pilotlichtbogenstromes auf ein Niveau, das auch einen größeren Überschlagabstand erlaubt, einen deutlichen Verschleiß zur Folge und führt dazu, daß die Lebensdauer der Bauelemente des Plasmabrenners verkürzt wird.

Aufgabe der Erfindung ist es, eine Schaltung zum Anschluß eines Plasmabrenners an eine Gleichstromquelle zu schaffen, deren Verwendung die Vergrößerung des Überschlag- oder Übertragungsabstandes ermöglicht, ohne mit den Nachteilen behaftet zu sein, die von einem großen Pilotlichtbogenstrom herrühren. Diese Aufgabe wird mit der Erfindung mit den in den Ansprüchen angegebenen Merkmalen gelöst.

Die erfindungsgemäße Plasmaeinrichtung wird mit Gleichstrom betrieben, der von einer Impuls-Gleichstromversorgung wie beispielsweise einem Inverter oder einer anderen geeigneten Gleichstromquelle zur Verfügung gestellt werden kann. Die Schaltung, die die Stromquelle mit der Plasmaeinrichtung bzw. dem Brenner verbindet, weist üblicherweise einen ersten Schaltungsabschnitt zum Erzeugen eines zwischen der Elektrode und der Düse brennenden Pilotlichtbogens und einen zweiten Schaltungszweig auf, der dazu dient, zwischen Elektrode und Werkstück einen Arbeits-Plasmalichtbogen zu erzeugen. Ein im zweiten Schaltungszweig angeordneter Stromsensor ermittelt den momentanen Werkstückstrom im zweiten Schaltungszweig und eine in Abhängigkeit des Werkstückstroms schaltende Schalteinrichtung wird dazu verwendet, den für den Pilotlichtbogen zuständigen Zweig der Schaltung zu öffnen, wenn der Werkstückstrom über einen bestimmten, vorgewählten Wert ansteigt. Auf diese Art und Weise beginnt der Strom im zweiten Zweig der Schaltung zu fließen, wenn Werkstück und Düse näher aufeinander zubewegt werden. Dieser Stromfluß wird durch die von dem Pilotlichtbogen ionisierten Gase ermöglicht und ist ein Anzeichen für die Nähe zwischen Werkstück und Plasmabrenner. Wenn sich aus diesem Stromfluß ergibt, daß das Werkstück sich in einem vorher festgelegten Überschlagabstand (stand off distance) vom Brenner befindet, wird der Zündlichtbogenzweig oder -schaltkreis geöffnet und der von der Stromquelle zur Verfügung gestellte Strom liegt am Werkstück an. Der Pilotlichtbogen springt auf das Werkstück über, um dieses zu schneiden oder einer anderen Wärmebehandlung wie zum Beispiel Schweißen, Anlassen usw. zu unterwerfen. Derartige Anschlußschaltungen regeln den Strom im Pilotlichtbogenzweig auf eine vorgewählte Höhe, die üblicherweise im Bereich von 10 bis 30 Ampère liegt. Der Zündlichtbogenstrom wird zu Null, wenn der Pilotlichtbogenzweig des Anschlußschaltkreises geöffnet wird. Um den Pilotlichtbogenstrom auf das vorgewählte Niveau einzuregeln, wird ein Standardstromregler verwendet. Ein Signal, das den Wert des von der Stromquelle zum Pilotlichtbogen des Schaltkreis fließenden Strom Momentanstrom darstellt, wird mit einem zweiten Signal verglichen, das für den gewünschten Wert des Pilotlichtbogenstroms steht. Durch diesen Vergleich von gewünschtem oder Einstellwert des Pilotlichtbogenstroms und dem Wert des momentanen Zündlichtbogenstroms ist es möglich, den Regelungseingang der Stromquelle zu verstellen und so den momentanen Zündlichtbogenstrom auf den voreingestellten, gewünschten Zündlichtbogenstrom einzuregeln. Bei einer solchen Stromregelungseinrichtung wird mit der vorliegenden Erfindung eine Verbesserung vorgeschlagen mit einer Vorrichtung zum Erzeugen eines Auslösesignals (trip signal), wenn die ermittelte Werksstückspannung über einen niedrigen Schwellenstrom ansteigt, der deutlich geringer ist als der Werkstückstrom, der erforderlich ist, um einen zuverlässigen Überschlag des Zündlichtbogens zu erreichen. Die Erfindung weist ferner eine Vorrichtung auf, mit deren Hilfe das Niveau des den gewünschten Pilotlichtbogenstrom anzeigenden Signales auf einen Wert vergrößert wird, der überhalb des zuvor gewählten Einstellwertes liegt, wodurch der momentane Pilotlichtbogenstrom, der von der Stromquelle am Pilotlichtbogenschaltkreis anliegt, entsprechend vergrößert wird. Auf diese Art wird der gewünschte Wert für den Pilotlichtbogenstrom rapide vergrößert, wenn bereits ein geringer Werkstückstrom festgestellt wird. Dies hat zur Folge, daß auch der zum Werkstück fließende Strom entsprechend vergrößert wird, wodurch der Übergang des Pilotlichtbogens in den Betriebslichtbogen am Werkstück beschleunigt oder verbessert wird. Mit der Erfindung wird ein niedriger Pilotlichtbogenstrom solange aufrechterhalten, bis es ein Anzeichen dafür gibt, daß Werkstück und Düse sich aufeinander zubewegen. In diesem Fall wird der Sollwert für den Pilotlichtbogenstrom angehoben und damit auch der Ausgang der Stromquelle vergrößert, um den Lichtbogenüberschlag zu beschleunigen und dadurch auch den Abstand, den der Lichtbogen hierbei überbrücken kann (Überschlagabstand), erheblich zu vergrößern.

In bevorzugter Ausgestaltung der Erfindung wird der voreingestellte Wert (Sollwert) des Pilotlichtbogenstroms mit Hilfe einer Schaltung vergrößert, die ein Zeitbasissignal (time base signal) mit ansteigendem Niveau und einem vorgewählten Profil erzeugt, so daß der voreingestellte Anstieg zum eingestellten Stromsignal addiert wird und entsprechend bewirkt, daß der Momentanwert des von der Stromversorgung am Pilotlichtbogenzweig des Schaltkreises anliegenden Stroms ansteigt. In der Praxis hat sich als voreingestelltes Profil ein Rampenprofil als vorteilhaft erwiesen, daß gestartet wird, wenn festgestellt wird, daß der Arbeitsstrom über einen voreingestellten, niedrigen Schwellenstrom von etwa 20 bis 80 Milliampere ansteigt. Bei dieser Ausgestaltung wird bei Erreichen oder Überschreiten des niedrigen Schwellenstroms durch den Werkstückstrom ein Auslösesignal erzeugt, das einen Rampengenerator oder einen Sägezahngenerator in Gang setzt, der eine größer werdende Ausgangsspannung hat, die zu der Spannung hinzuaddiert wird, die den Sollwert für den Pilotlichtbogenstrom representiert. Auf diese Art und Weise wird der Pilotlichtbogenstrom rampenförmig angehoben, bis der Werkstückstrom einen voreingestellten Überschlagwert erreicht, der größer sein sollte als etwa 150 Milliampère und üblicherweise im Bereich bis zu 3 Ampere liegt. Wenn der Werkstückstrom den voreingestellten Wert für einen Lichtbogenüberschlag erreicht, wird der Lichtbogen auf das Werkstück übergeleitet (Lichtbogenüberschlag) und der Rampen- bzw. Sägezahngenerator wird zurückgesetzt, bis der nächste Pilotlichtbogenbetrieb beginnt.

Der Wellenform-Schaltkreis kann jede Art und Anzahl von voreingestellten Profilen haben, beispielsweise eine Rampe, geradlinige Rampe, stufenförmige Rampe, konkave oder konvexe Kurve, eine zeitkonstante Kurve oder ein Profil nach einer Stufenfunktion aufweisen, ohne daß dies Einfluß auf die grundsätzliche Ausgestaltung und den Umfang der Erfindung hätte. Tatsächlich ist es auch denkbar, daß bei Erreichen des geringen Schwellenstroms der gewünschte Pilotlichtbogenstrom sofort von einem ersten, niedrigen Sollwert von z.B. 15 Ampère auf einen hohen Wert von beispielsweise 25 Ampere angehoben wird, also nach Art einer Sprungfunktion. In jedem Fall jedoch wird der Pilotlichtbogenstrom niedrig gehalten, solange, bis sich der Abstand zwischen Plasmabrenner und Werkstück verringert. Erst dann wird das Signal, das den gewünschten Pilotlichtbogenstrom darstellt und für die Stromregulierung der Stromquelle dient, angehoben, um so entsprechend den am Werkstück anliegenden Strom zu vergrößern und dadurch einen Überschlagabstand zu ermöglichen, wie er bei einem hohen und nicht bei einem niedrigen Niveau des Pilotlichtbogenstroms erreicht wird. Mit der Erfindung wird die Lebensdauer des Brenners erheblich verlängert und bei gegebenem Grundwert für den Pilotlichtbogenstrom der Überschlagabstand vergrößert.

Es hat sich gezeigt, daß der Werkstückstrom, bei dem der Lichtbogen übertragen wird, auf einen Wert eingestellt sein sollte, der größer als 150 Milliampere ist. Der gewählte, niedrige Schwellenstrom wird daher zweckmäßig auf unter 100 Milliampere eingestellt. In der Praxis hat es sich als besonders vorteilhaft erwiesen, den Schwellenwert des Werkstückstromes, der vor einem Lichtbogenüberschlag zu fließen beginnt, auf einen Wert von 20 bis 80 Milliampère einzustellen. Wenn der niedrige Schwellenstrom erreicht wird und der Sollwert des Pilotlichtbogenschaltkreises angehoben wird, ohne daß ein Erreichen das für den Lichtbogenübergang erforderlichen Stroms festgestellt wird, wird die Wellenform-Schaltung (Wave form circuit)vorzugsweise zurückgesetzt, um den Stromregler der Stromquelle auf den niedrigen, voreingestellten Pilotstrom zurückzuschalten. Gelegentlich kommt es vor, daß der Lichtbogen überspringt, bevor der Pilotlichtbogenstrom erfindungsgemäß vergrößert wird. In anderen Fällen konnte auch beobachtet werden, daß der gewünschte Pilotlichtbogenstrom auf einen Wert oberhalb des Sollwerts angehoben wurde, ohne daß es zum Lichtbogenübersprung kam. In solchen Fällen wird mit der Erfindung einfach der Wellenformschaltkreis zurückgesetzt und auf ein erneutes Anzeichen für einen bevorstehenden Lichtbogenübersprung gewartet.

Mit der Erfindung wird in besonders vorteilhafter Weise eine Schaltung und ein Verfahren geschaffen, durch die es möglich wird, Gleichstromquelle und Plasmaeinrichtung so zu verbinden, daß damit ein größerer Überschlagabstand (stand off) möglich wird, als er normalerweise mit dem voreingestellten Strom im Pilotlichtbogenzweig des Schaltkreises erreichbar ist, wodurch bei reduziertem Verschleiß des Plasmabrenners eine bessere Effizienz erreicht wird. Mit der Erfindung wird in vorteilhafter Weise ein Übertragungs- oder Überschlagsabstand erreicht, der einem höheren Pilotstrom entspricht als dem normalen, voreingestellten Pilotstrom, wie er bei der erfindungsgemäßen Schaltung bzw. dem erfindungsgemäßen Verfahren eingestellt ist. Mit der Erfindung wird die im Pilotlichtbogenmodus beim Betrieb des Plasmaeinrichtung verbrauchte Energie merklich reduziert. Darüber hinaus ist es mit der Erfindung in besonders vorteilhafter Weise möglich, den Lichtbogenübergang bereits bei Erreichen eines Stroms von 160 bis 500 Milliampere zu erreichen, wohingegen ältere System üblicherweise Übertragungsströme zwischen 2 und 3 Ampère erforderten.

Diese und weitere Merkmale und Vorteile der Erfindung ergeben sich aus der nachfolgenden Beschreibung und den Zeichnungen, worin neben dem Stand der Technik bevorzugte Ausführungsformen der Erfindung an einem Beispiel näher erläutert werden. Es zeigt:
Fig. 1 eine schematische Darstellung einer vorbekannten Schaltung zum Anschluß einer Stromquelle an eine Plasmaeinrichtung, bei der der Lichtbogenübersprung bei 2 bis 3 Ampere erfolgt und der Zündlichtbogenstrom auf 25 Ampere eingestellt ist;
Fig. 2 eine Fig. 1 entsprechende, schematische Darstellung einer bevorzugten Ausführungsform der erfindungsgemäßen Schaltung;
Fig. 3 einen die Betriebscharakteristika der bevorzugten Ausführungsform nach Fig. 2 darstellenden Stromgraphen, wobei der gewünschte Strom für den Pilotlichtbogen in einem ersten Maßstab und der Werkstückstrom auf derselben Zeitlinie, jedoch in anderem Maßstab dargestellt sind;
Fig. 4 eine Stromkurve zur Darstellung des Pilotlichtbogenstroms bei der bekannten Schaltung nach Fig. 1 und bei der bevorzugten Ausführungsform der Erfindung nach Fig. 2;
Fig. 5 eine Darstellung zum Überschlag-Abstand der erfindungsgemäßen Plasmalichtbogeneinrichtung;
Fig. 6a eine Spannungskurve zur Darstellung eines ersten, bevorzugten Ausgangssignalprofils des in Fig. 2 dargestellten Wellenformschaltkreises; und
Fig. 6b eine Spannungskurve zur Darstellung von alternativ gewählten Ausgangssignalprofilen des Wellenschaltkreises nach Fig. 2.

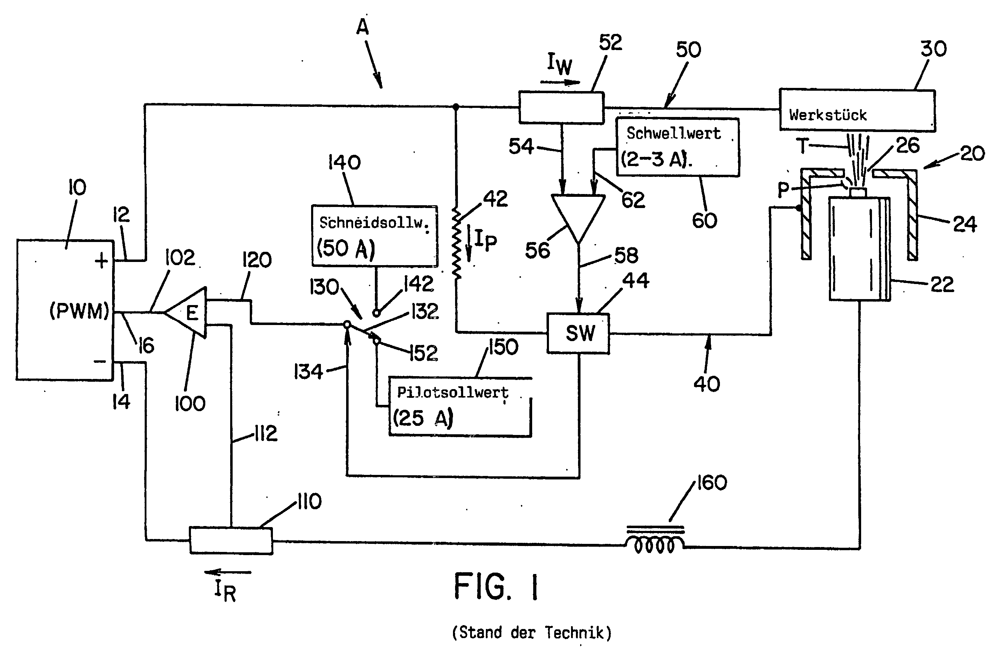

In Fig. 1 bezeichnet A eine aus dem Stand der Technik bekannte Schaltung für eine Plasmaeinrichrung bzw. einen Plasmabrenner 20, die an einer Gleichstromspannungsversorgung 10 an deren Ausgangsanschlüssen 12 und 14 und an einem Stromregeleingang 16 angeschlossen ist. Die Stromquelle 10 stellt einen Gleichstrom mit einer Stromstärke zur Verfügung, die von der Spannung am Stromregeleingang 16 bestimmt wird, die von einem Pulsweiten Modulator (PWM) in bekannter Weise überwacht wird. Die am Eingang 16 anliegende Spannung steuert den von der Stromquelle 10 gelieferten Strom in bekannter Art und Weise. Die Stromversorgung 10 kann einen pulsierenden oder einen gleichförmigen Gleichstrom zur Verfügung stellen, beispielsweise ein Inverter oder ein SCRgeregelter Dreiphasengleichrichter sein. Für ein einfacheres Verständnis der vorliegenden Erfindung soll angenommen werden, daß an den Anschlüssen 12, 14 ein gleichbleibender Gleichstrom anliegt; jedoch ist es ohne weiteres möglich, sowohl die Schaltung A als auch die Schaltung nach der Erfindung mit einer Stromversorgung zu betreiben, die einen pulsierenden Gleichstrom liefert.

Der Plasmabrenner 20 weist eine Elektrode 22 und eine Düse 24 auf, die mit einer Plasmalichtbogenöffnung 26 versehen ist, durch die die Elektrode in Richtung auf ein vor dem Brenner 20 liegendes Wekstück 30 ausgerichtet wird. In an sich bekannter Weise wird zwischen Elektrode 22 und Düse 24 zuerst ein Pilotlichtbogen P gezündet. Wenn ein vorher bestimmter Arbeitszustand eintritt, nämlich der Brenner und das Werkstück in eine Lage zueinander gebracht werden, in der sie einen vorher festgelegten Abstand voneinander haben, was normalerweise durch den über das Werkstück fließenden Werkstückstrom festgestellt wird, wird der Pilotlichtbogen P übertragen und springt auf das Werkstück 30 über, so daß ein Arbeitslichtbogen T entsteht, wie dieser schematisch in Fig. 1 dargestellt ist. Um den Pilotlichtbogen P zu erzeugen, wird durch einen ersten Schaltungszweig 40 ein Strom I_{P} geleitet. Der erste Schaltungszweig weist einen Widerstand 42 und einen Festkörperschalter 44 (Halbleiterschalter, solid state switch) auf, beispielsweise einen IGT oder ein ähnliches Schaltelement. Der Widerstand 42 wird bei Plasmaschaltkreisen häufig verwendet, um zwischen dem Werkstück 30 und der Düse 24 eine Spannung zu erzeugen. Die Größe des Widerstands 42 und des Pilotlichtbogenstroms I_{P} bestimmen die zwischen Werkstück und Düse anliegende Spannung. Die Spannung am Widerstand 42 ist bedeutsam für den "stand off", d.h. den Übertragungs- oder Überschlagabstand zwischen dem Brenner 20 und dem Werkstück 30. Der Widerstand ist nur zu illustrativen Zwecken dargestellt, da die Erfindung nicht auf die tatsächliche Spannung gegründet ist, die durch verschiedenartige Schaltungen gesteuert bzw. geregelt werden kann. Zur Erläuterung der Erfindung sei angenommen, daß die Größe des Widerstandes 42 5,0 Ohm beträgt, um bei einem Pilotlichtbogenstrom I_{P} von 25 Ampere eine Spannung von etwa 125 Volt zu erzeugen.

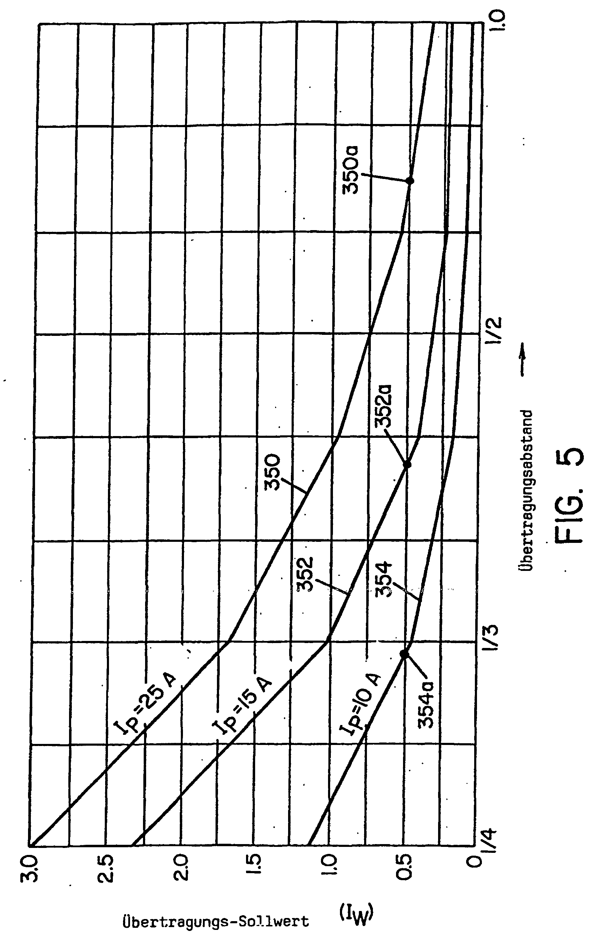

Bei dem in Fig. 1 dargestellten bekannten Schaltkreis wird ein zweiter Schaltungszweig 50 dazu verwendet, zwischen Werkstück 30 und Elektrode 22 einen Strom fließen zu lassen, wenn der Pilotlichtbogen P den Spalt zwischen Elektrode und Werkstück ionisiert. Um diesen Werkstückstromfluß I_{W} zu messen, ist ein Stromsensor 52 vorgesehen, der an einem Ausgang 54 eine Spannung hat, die ein Maß für die Größe des Werkstückstroms I_{W} ist. Die an der Ausgangsleitung 54 anliegende Spannung wird einem Komparator 56 zugeführt, der einen logischen Schaltausgang 58 hat, der einen logischen Wert 1 annimmt, wenn die auf Leitung 54 anliegende Spannung einen Wert erreicht, der einem vorgewählten Strom entspricht, der von einem Schwellwertschaltkreis 60 einstellbar ist und einen Spannungsausgang 62 hat, der ebenfalls am Komparator 56 anliegt, so daß die beiden an den Leitungen 54 und 62 anliegenden Spannungen miteinander verglichen werden können. Wenn die auf Leitung 54 anliegende Spannung größer wird als die Spannung auf Leitung 56, erhält der Ausgang des Komparators einen logischen Wert 1 und öffnet damit den Schalter 44 im Pilot-Lichtbogenschaltkreis 40. Die vom Schwellwertschaltkreis 60 zugelieferte, die Werkstückspannung repräsentierende Spannung sollte nach den Erfahrungen mit der bekannten Schaltungen vergleichsweise groß sein und mehr als etwa 160 Milliampere entsprechen. Bei den bekannten Plasmaeinrichtungen liegt dieser Schwellenstromwert üblicherweise bei einem voreingestellten Wert von 2 bis 3 Ampere. Demgemäß ist der Schalter 54 üblicherweise geschlossen, bis sich das Werkstück 30 schon bereits sehr nahe vor der Düse 24 sich befindet. Bei dieser Einstellung des Schwellwertschaltkreises 60 erreicht man mit einem Pilotlichtbogenstrom von 25 Ampere einen Überschlagabstand von etwa 6,3 mm (0,25 Inch), wie dies in dem Übertragungs-Abstandsschaubild in Fig. 5 prinzipiell dargestellt ist. Wenn der Schwellwertschaltkreis 60 auf zwei Ampere eingestellt wird, vergrößert sich der Überschlag- oder Übertragungsabstand auf ca. 8,5 mm (1/3 Inch). Bei voreingestelltem Strom von 2 Ampere für den Überschlag wird ein niedrigerer Pilotlichtbogenstrom von 15 Ampere einen Überschlag auf das Werkstück in einer Entfernung von etwa 6,3 mm noch ermöglichen. Ein Pilotlichtbogen von lediglich 10 Ampere jedoch wird bei einem voreingestellten Schwellenwert von 2,0 Ampere niemals einen Lichtbogenübergang auf das Werkstück bewirken, wenn sich dieses in der gleichen Entfernung von 6,3 mm vor dem Brenner befindet, wenn die in Fig. 1 dargestellte Schaltung zur Verwendung kommt. Die in Abhängigkeit von Pilotlichtbogenstrom und voreingestelltem Schwellenwert erreichbaren Überschlagabstände sind bekannte Parameter beim Betrieb der Schaltung für einen Plasma-Lichtbogenbrenner nach Fig. 1.

Die Stromversorgung 10 stellt einen geregelten Ausgangsstrom zur Verfügung, wozu sie von einem Fehlerverstärker 100 gesteuert wird, dessen Ausgangs-Spannungssignal auf einer Leitung 102 die Pulsbreite am modulierten Stromreglereingang 16 der Stromversorgung regelt. Hierzu wird in bekannter Weise der Momentanstrom über einen Nebenschlußwiderstand 110 ermittelt, wobei die Spannung, die ein Wert für die Größe des Momentanstroms I_{R} ist, über eine Leitung 112 am ersten Eingang des Fehlerverstärkers 100 anliegt. Der zweite Eingang dieses Verstärkers wird von der auf einer Leitung 120 anliegenden Spannung bestimmt, die ein Wert für den gewünschten Strom zu jedem gegebenen Zeitpunkt im Schaltkreis A ist. Mit Hilfe eines Festkörper-Wahlschalters 130 kann dieser Sollwert mit Hilfe eines beweglichen Kontaktes 132 eingestellt werden, wobei dieser Kontakt in Abhängigkeit von dem logischen Wert betätigt wird, der an der Schaltleitung 134 anliegt. Der Schalter 130 schaltet zwischen einer ersten Spannungsquelle 140 zum Einstellen des Schneid- bzw. Arbeitsstroms und einer zweiten Spannungsquelle 150 zum Einstellen des Pilot-Lichtbogenstromes, wobei die von den beiden Spannungsquellen gelieferten Spannungen an den Kontakten 142 und 152 von dem Schalterteil 132 abgegriffen werden können. Die am Kontakt 142 anliegende Spannung ist also ein Maß für den gewünschten Arbeits- bzw. Schneidstrom des Brenners 20, der bei der Schaltung 50 Ampere beträgt. Am Kontakt 152 liegt eine Spannung an, die den gewünschten Lichtbogenstrom I_{P} im ersten Schaltungszweig 40 representiert, also bei der Schaltung in Fig. 1 25 Ampere beträgt. Die Schaltung A zum Betrieb der Plasmaeinrichtung bzw. des Brenners 20 mittels der Gleichstromversorgung 10 wird durch eine Hauptspule 160 zwischen der Elektrode 22 und dem "Shunt" 110 vervollständigt.

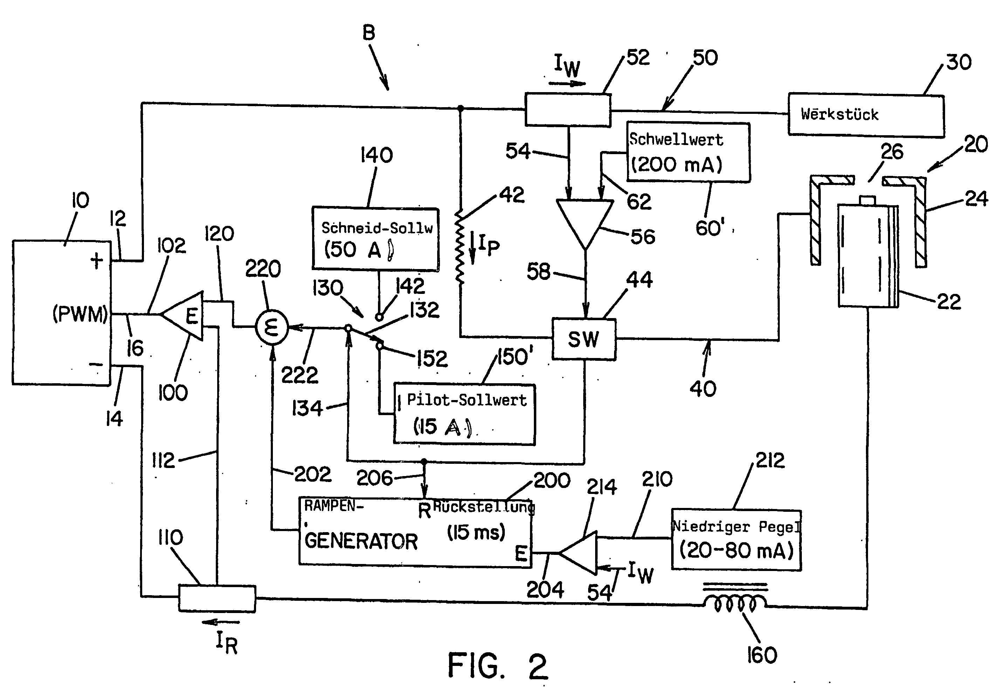

Bei der in Fig. 2 dargestellten, bevorzugten Ausführungsform der Erfindung werden diejenigen Elemente und Bauteile, die denen beim Stand der Technik gemäß Fig. 1 entsprechen, mit entsprechenden Bezugszeichen benannt. Bei der in Fig. 2 dargestellten Schaltung B ist der Schwellenwertkreis 60' so eingestellt, daß seine Ausgangsspannung in der Leitung 62 einem Werkstückstrom von 210 Milliampère entspricht, während der Sollwertgeber 150' für den Pilotstrom am Kontakt 152 eine Spannung zur Verfügung stellt, die einem Pilotlichtbogenstrom I_{P} von 15 Ampere anstelle der beim Stand der Technik gemäß Fig. 1 gewählten 25 Ampere entspricht. Im übrigen unterscheiden sich die Schaltungsbauteile des Schaltkreises B, soweit sie auch bei dem Schaltkreis A gemäß Fig. 1 vorhanden sind, von diesen praktisch nicht.

Erfindungsgemäß ist die Schaltung nach dem Stand der Technik im wesentlichen dadurch verbessert, daß ein zusätzlicher Wellenform-Schaltkreis 200 in Form eines üblichen Spannungs-Kippgenerators vorgesehen ist, der ein rampenförmiges Spannungsausgangssignal auf eine Leitung 202 liefert, wobei er hierzu ein entsprechendes Freigabesignal an seinem Freigabeanschluß G über die Leitung 204 erhält. Wenn das logische Freigabesignal auf Leitung 204 den Wert 1 annimmt, wird der Kippgenerator 200 freigegeben und gibt auf Leitung 202 ein Ausgangssignal in Form einer rampenförmig ansteigenden Spannung. Der Generator 200 hat ferner einen Rücksetz-Anschluß R zum Empfang eines logischen Signals, das an einer Steuerleitung 206 anliegt und einen Wert für die Rücksetzung annimmt, wenn über die Schaltleitung 134 der Auswahlschalter 130 betätigt wird, was dann geschieht, wenn der Pilotschaltkreis 40 von dem logischen Signal in Leitung 58 geöffnet wird. Der Rampengenerator 200 wird dadurch unabhängig von seinem momentanen Betriebszustand immer dann wieder in einen Zustand zurückgesetzt, in dem er ein Signal "Null" oder eines mit "niedrigem Niveau auf Leitung 202 erzeugt, wenn der Schalter 44 geöffnet und der Wahlschalter 130 in eine Stellung umgeschaltet wird, in der er an der Klemme 142 für den Sollwert des Arbeits- bzw. Schneidstroms anliegt.

Der an der Freigabeleitung 204 anliegende logische Wert wird durch die Spannung in Leitung 54 bestimmt, die einen Wert für den Werkstückstrom I_{W} darstellt, wie dies zuvor in Zusammenhang mit der Schalung A beschrieben wurde. Verglichen wird diese an Leitung 54 anliegenden Spannung mit einer an einer Leitung 210 anliegende Spannung, die von einem Sollwert-Schaltkreis 212 bestimmt ist und einen Spannungswert hat, der ein vergleichsweise niedriges Stromniveau representiert, das in der Praxis üblicherweise niedriger als 100 Milliampere liegt und bevorzugt zwischen 20 und 80 Milliampere beträgt. Die beiden an den Leitungen 54 und 210 anliegenden Spannungen werden von einem Komparator 214 verglichen, so daß das über die Leitung 204 ausgegebene Schaltsignal den Kippgenerator schaltet, wenn die den Werkstückstrom darstellende Spannung auf Leitung 54 größer wird als die voreingestellte Spannung auf Leitung 210. Hierdurch wird in der Ausgangsleitung 202 eine rampenartig ansteigende Spannung erzeugt, die den ersten Eingang zu einer summierenden Anordnung 220 bildet. Der zweite Eingang zu dieser Summierstelle 220 ist an eine Leitung 222 angeschlossen, über die die Spannung vom Auswahlschalter 130 der Summierstelle zugeführt wird. Das Ausgangssignal der Summierstelle ergibt sich damit durch die Addition der Spannung auf Leitung 220 und der ansteigenden Spannung auf Leitung 202 zu einer Spannung in Leitung 120, die den zweiten Eingang zum Spannungsregler oder Fehlerverstärker 100 bildet.

Im Betrieb der beschriebenen Schaltung wird der Pilotlichtbogenstrom mittels der Pilot-Sollwert-Spannungsversorgung 150' auf einen Wert von 15 Ampere geregelt. Es fließt also ein vergleichsweise niedriger Pilot-Lichtbogenstrom I_{P} im ersten Schaltungszweig 40. Wenn sich das Werkstück 30 und der Brenner 20 aufeinander zubewegen, stellt die Stromabtasteinrichtung 52 einen zwischen Werkstück und Brenner fließenden Werkstückstrom I_{W} fest, der dort über das durch den Primärlichtbogen ionisierte Gas fließt. Demgemäß liegt auf Leitung 54 eine diesem ermittel- , ten Strom entsprechende Spannung an. Wenn diese Spannung größer wird als die Niedrigniveau-Schwellenspannung auf Leitung 210, schaltet der Komparator 214 auf das andere logische Signal in Leitung 204, wodurch der Kippgenerator 200 freigegeben wird und auf Leitung 202 eine Rampenspannung ausgibt. Diese ansteigende Spannung wird zur Sollwertspannung in Leitung 22 im Additionspunkt 220 hinzuaddiert. Hierdurch kommt es zu einem Anstieg der Spannung zweiten Signals bzw. des Sollwerts auf Leitung 120, so daß der Stromregler 100 den dem Schaltkreis B zugeführten Strom rampenförmig anhebt. Dies widerum hat einen Anstieg des Pilot-Lichtbogenstroms I_{P} auf 25 Ampere zur Folge. Der Anstieg im Pilotlichtbogenstrom widerum bewirkt einen entsprechenden Anstieg im Werkstückstrom I_{W}, wodurch es sehr schnell zu einem Lichtbogenüberschlag vom Pilotlichtbogen zwischen Elektrode und Düse zum Arbeitslichtbogen kommt, der zwischen der Elektrode 22 und dem Werkstück 30 brennt. Dieser Lichtbogenüberschlag erfolgt bereits bei einem Schwellenwert von 200 Milliampere im Schwellenstromkreis 60' nach Fig. 2.

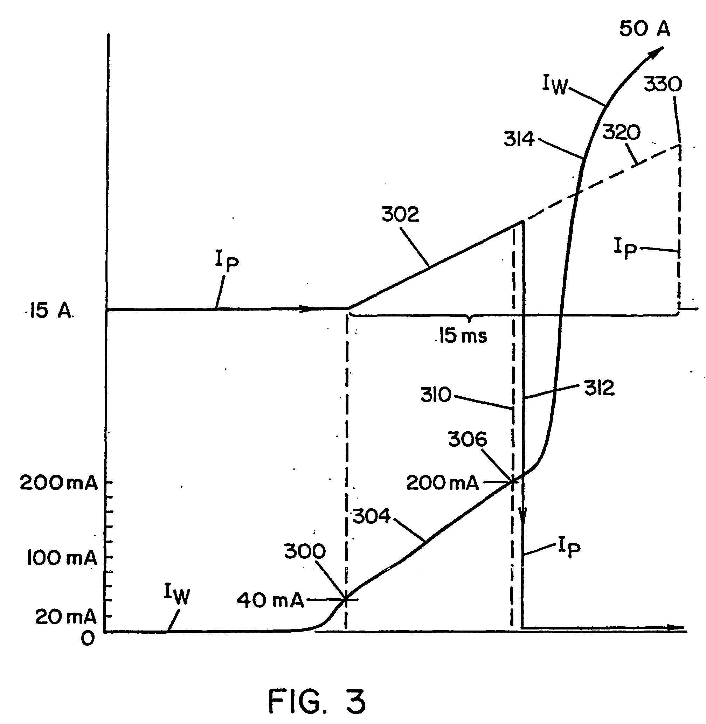

Die Betriebscharakteristika der in Fig. 2 dargestellten, bevorzugten Ausführungsform der Erfindung sind in dem Graph gemäß Fig. 3 wiedergegeben. Dabei ist der Pilotstrom I_{P}, der anfänglich 15 Ampere beträgt, in einem größeren Maßstab aufgezeichnet als der Arbeitsstrom I_{W}. Bei Erreichen eines niedrigen Schwellenstroms von 40 Milliampere in Leitung 54 wird der Kippgenerator 200 am Eingang I freigegeben. Dieser Punkt ist in Fig. 3 durch den Schnittpunkt der Stromkurve (I_{W}) und des Schwellenwerts auf Leitung 210 dargestellt und mit 300 bezeichnet. Bei Erreichen bzw. Überschreiten dieses Punktes 300 steigt der Pilotstrom I_{P} entlang der Linie 302 an, bis das Signal für den Werkstückstrom I_{W} auf Leitung 54 die Spannung erreicht, die von dem Schwellenwert-Schaltkreis 60' auf Leitung 62 ausgegeben wird und die einen Schwellenwert von 200 Milliampère entspricht, der im Punkt 306 auf der vertikalen Linie 310 in Fig. 3 erreicht wird. Der Komparator 56 öffnet dann den Schalter 54 und stoppt den Pilotstrom, der demgemäß entlang der Linie 312 auf Null abfällt. Hierdurch widerum kommt es zu einem logischen Signal auf Leitung 206, das den Kippgenerator 200 zurücksetzt, so daß dieser nicht fortfährt, auf Leitung 202 eine weiter ansteigende Spannung zur Verfügung zu stellen. Der Arbeitsstrom steigt weiter entlang der Linie 314 auf die 50 Ampere an, die durch die an Klemme 142 des Auswahlschalters 130 liegende Spannung vorgegeben sind. Diese Spannung ist dann das zweite Signal auf der Leitung 120 und steuert den Ausgangstrom der Stromquelle 10. Es hat sich in der Praxis als zweckmäßig erwiesen, den Kippgenerator 200 so zu betreiben, daß das Spannungsniveau, das die gewünschten 25 Ampere Pilotstrom representiert, innerhalb von etwa 15 Millisekunden erreicht wird, wie dies durch die gestrichtelte Linie 320 angedeutet ist. Wenn das logische Signal auf Leitung 58 und damit in Leitung 206 nicht umgeschaltet wird, wird der Kippgenerator bei Erreichen des Punktes 330 zurückgesetzt und erwartet dann erneut ein Anzeichen für einen bevorstehenden Lichtbogenüberschlag.

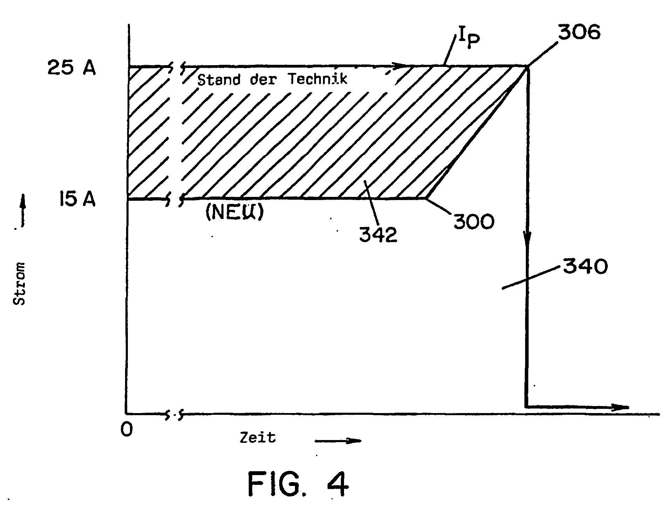

Wie sich dies aus Fig. 4 ergibt, wird mit der Erfindung der beim Betrieb einer Plasmaeinrichtung, beispielsweise eines Brenners 20, erforderliche Energieverbrauch reduziert. Die bei der bekannten Schaltung nach dem Stand der Technik verbrauchte Energie entspricht dem rechteckigen Bereich 340, der von der horizontalen 25 Ampèrelinie und der vertikalen Linie definiert wird, in der der Pilotlichtbogenstrom beim Schneiden auf Null zurückgeht. Der schattiert dargestellte Bereich 342 entspricht der Energieersparnis, die die vorliegende Erfindung dadurch ermöglicht, daß der Pilotlichtbogenstrom bis zum Erreichen des Punktes 300 auf 15 Ampere gehalten wird und erst dann auf 25 Ampere ansteigt. Zwischen dem Zeitpunkt Null, also dem Start des Pilotlichtbogens und dem Übergang des Lichtbogens auf das Werkstück in Punkt 306 wird also während der gesamten Zeit Energie eingespart.

Fig. 5 ist ein Diagramm mit Übertragungs-Abstandsgraphen einiger representativer Werte. So stellt in diesem Diagramm die Linie 350 eine Übertragungs-Abstandslinie für einen Pilotlichtbogen mit einer Stromstärke von 25 Ampere dar. Die Linie 352 ist eine ensprechende Linie für den Betrieb bei 15 Ampere und die Linie 354 für den Betrieb bei 10 Ampere. Aus der Darstellung ist leicht ersichtlich, daß der Übertragungsabstand für einen vorgegebenen Schwellenwert des Schwellenwertschaltkreises 60 (Fig. 1) bzw. 60' (Fig. 2) um so größer wird, je höher der Pilotlichtbogenstrom ist. Bei einem voreingestellten Schwellenwert von beispielsweise 500 Milliampere beträgt der Übertragungsabstand bei einem Pilotlichtbogenstrom von 10 Ampere weniger als 1/3 Inch (8,5 mm), vergleiche Punkt 354a, bei einem Pilotstrom von 15 Ampère liegt der Übertragungsabstand zwischen 1/3 und 1/2 Inch (8,5-1,3 mm) (vgl. Punkt 352a) und mit einem Pilotstrom von 25 Ampere kann bereits ein Spalt überbrückt werden, der etwa 0,75 Inch (19,05 mm) beträgt. Der entsprechende Punkt ist in Fig. 5 mit 350a bezeichnet. Wenn der Kippgenerator 200 die auf Leitung 120 anliegende Spannung vergrößert, nachdem der Werkstückstrom auf Leitung 54 den voreingestellten, niedrigen Wert in Leitung 210 erreicht, verändert sich der erreichbare Übertragungsabstand von Punkt 352a zu Punkt 350a, da der Pilotstrom angehoben wird. Dieser ganz bemerkenswerte Anstieg im "stand off", also in dem Abstand, in dem der Lichtbogen beim Übergang vom Pilotbetrieb in Arbeits- bzw. Schneidbetrieb überbrücken kann, wird durch die besonders vorteilhafte, erfindungsgemäße Schaltung erreicht.

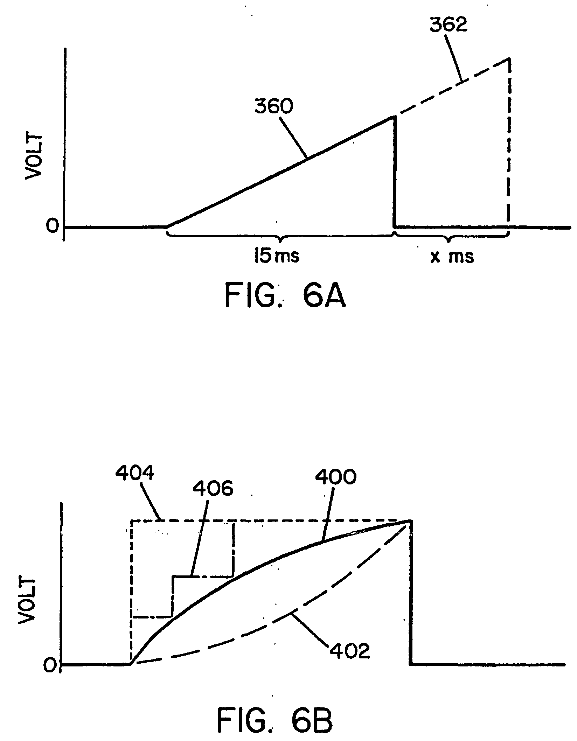

Wie bereits zuvor erwähnt, kann der Wellenformschaltkreis 200 unterschiedliche Profile zur Verfügung stellen, nach denen der Plasma-Lichtbogenstrom mit vielen verschiedenen Wellenformen vergrößert werden kann. Einige Beispiele dieser Wellenformen sind in den Fig. 6a und 6b schematisch dargestellt. In der bevorzugten, zuvor beschriebenen Ausführungsform hat die Welle die Form einer Rampe, d.h. der Wellenformschaltkreis besteht im wesentlichen aus dem Kippgenerator, der eine Spannungsrampe 360 wie in Fig. 6a erzeugt. Diese Rampe wird bei der bevorzugten Ausführungsform nach 15 Millisekunden zurückgesetzt. Natürlich wäre es auch möglich, die Rücksetzung erst nach einer zusätzlichen Zeit x durchzuführen, wodurch sich eine längere Rampe 362 ergeben würde, die in Fig. 6 gestrichelt angedeutet ist.

Die in Fig. 6b dargestellten Spannungsverläufe zeigen eine Auswahl von Wellenformen, die ebenfalls bei der vorliegenden Erfindung zum Einsatz kommen können. So kann die Spannung beispielsweise nach einer konvexen Kurve 400 oder einer konkaven Kurve 402 erhöht werden. Es ist auch denkbar, die Spannung nach Art einer Sprungfunktion anzuheben, bei der sie sofort von einem Wert Null auf den vorgegebenen Endwert angehoben wird. Ähnlich wäre auch ein Anstieg der Spannung in mehreren Schritten, wie dies durch die strichpunktierte Linie 406 angedeutet ist. Auch andere Wellenformen sind denkbar, mit denen der gewünschte Strom für den Pilotlichtbogenschaltkreis 40 angehoben wird, wenn der Schwellenwert in Leitung 210 von der Spannung auf Leitung 54 erreicht bzw. überschritten wird.

## Patentansprüche

1. Schaltungsanordnung für eine Plasma-Lichtbogeneinrichtung (20) mit einer gegenüber einem Werkstück (30) positionierbaren Elektrode (22) und einer diese umgebenden Brennerdüse (24), mit einer regelbaren Stromversorgung (10), mit einer Meßeinrichtung zum Ermitteln des über das Werkstück (30) fließenden Werkstückstroms (I_{w}), einer Regeleinrichtung zum Einstellen des in einer Pilotphase zwischen Elektrode und Düse über einen Pilotlichtbogen (P) fließenden Pilotstroms (Iₚ) auf einen voreingestellten Pilotstromsollwert sowie mit einer Umschalteinrichtung zum Öffnen des Pilotlichtbogenstromzweigs (40), wenn der Werkstückstrom (I_{w}) einen bestimmten, voreingestellten Überschlagwert überschreitet, **gekennzeichnet durch** eine von der Meßeinrichtung für den Werkstückstrom (I_{w}) beaufschlagten, bei Überschreiten eines niedrigen Schwellenstromwerts aktivierte Schalteinrichtung (200) zur Erhöhung des Pilotstromsollwerts und Verstellung der Stromversorgung (10) auf einen höheren Pilotstrom.

2. Schaltungsanordnung nach Anspruch 1, **dadurch gekennzeichnet, daß** die Stromversorgung (10) über eine Steuer- bzw. Regelschaltung (B) mit der Lichtbogeneinrichtung (20) verbunden ist, wobei die Schaltung (B) den Pilotlichtbogenstromzweig (40) zum Erzeugen des Pilotlichtbogens (P) zwischen Elektrode (22) und Düse (24) sowie einen zweiten Schaltungszweig (50) zum Erzeugen eines Arbeitslichtbogens (T) zwischen Elektrode (22) und Werkstück (30) aufweist, wobei im zweiten Schaltungszweig (50) die genannte Meßeinrichtung (52) zum Bestimmen des Werkstückstroms (I_{w}) und Schaltmittel (56, 58, 44) zum Öffnen des ersten Schaltungszweigs (40) vorgesehen sind, wenn der Werkstückstrom (I_{w}) über einen voreingestellten Schaltstrom (60, 60') ansteigt, um den Pilotlichtbogen (P) in den Arbeitslichtbogen (T) zu überführen, und mit einer Anordnung zum Regeln des Stroms in dem ersten Schaltungszweig (40) bis zum Übergang des Pilotlichtbogens in den Arbeitslichtbogen, wobei die Stromregelanordnung Mittel (110) zum Erzeugen eines ersten, den Momentanstrom im ersten Schaltungszweig (40) repräsentierenden Signals sowie Mittel (150, 152) zum Erzeugen des Pilotstromsollwerts für den im ersten Schaltungszweig (40) gewünschten Strom und einen Komparator (100) aufweist, der die beiden Signale miteinander vergleicht und dem Stromregeleingang (16) der Stromversorgung (10) ein Stellsignal (102) zuführt, mit dessen Hilfe der Momentanstrom (I_{R}) auf den gewünschten Strom eingeregelt wird, wobei der Pilotstromsollwert einen voreingestellten Wert hat und wobei in der genannten Schalteinrichtung (200) zur Erhöhung des Pilotstromsollwertes Mittel zum Erzeugen eines Übertragungssignals vorgesehen sind, wenn der ermittelte Werkstückstrom (Iw) über den niedrigen Schwellenstromwert ansteigt, der geringer ist als der voreingestellte Schaltstrom (60'), und wobei Schaltmittel (220) zum Vergrößern des Pilotstromsollwerts auf einen Wert oberhalb des voreingestellten Werts vorgesehen sind, um dementsprechend den von der Stromversorgung (10) zum ersten Schaltungszweig (40) zugeführten Momentanstrom zu vergrößern.

3. Schaltungsanordnung nach Anspruch 1 oder 2, **gekennzeichnet durch**
- eine Auslöseschaltung (212,214) zum Erzeugen eines Schaltsignals, wenn der Werkstückstrom einen niedrigen Schwellenstromwert überschreitet, der geringer ist als der voreingestellte Schaltstrom (60');
- ein Wellenformschaltelement (200) in der genannten Schalteinrichtung zur Erhöhung des Pilotstromsollwerts zum Erzeugen eines Zeitbasissignals mit entsprechend einem vorgegebenen Profil (360; 400-406) ansteigendem Niveau, das **durch** das Schaltsignal auslösbar ist; und **durch**
- eine Summiereinrichtung (220) zum Addieren des Zeitbasissignals zu dem zweiten Signal, so daß das zweite Signal um das Zeitbasissignal entsprechend dem gewählten Profil angehoben und somit der dem ersten Schaltungszweig (40) zugeführte Momentanstrom vergrößert wird.

4. Schaltungsanordnung nach einem der Ansprüche 1 bis 3, **dadurch gekennzeichnet, daß** der voreingestellte Schaltstrom größer ist als 150 mA.

5. Schaltungsanordnung nach einem der Ansprüche 1 bis 4, **dadurch gekennzeichnet, daß** der voreingestellte Schaltstrom zwischen 0,15 und 3 A liegt.

6. Schaltungsanordnung nach einem der Ansprüche 1 bis 5, **dadurch gekennzeichnet, daß** der niedrige Schwellenstromwert weniger als 100 mA beträgt.

7. Schaltungsanordnung nach einem der Ansprüche 1 bis 6, **dadurch gekennzeichnet, daß** der Schwellenstromwert zwischen 20 und 80 mA liegt.

8. Schaltungsanordnung nach einem der Ansprüche 1 bis 7, **gekennzeichnet durch** eine Rückstellschaltung (44, R) zum Zurücksetzen des Pilotstromsollwertes bzw. zweiten Signals von dem erhöhten Wert auf den voreingestellten Wert, wenn der Pilotlichtbogen in den Arbeitslichtbogen übergeht.

9. Schaltungsanordnung nach einem der Ansprüche 1 bis 8, **gekennzeicnet durch** eine zweite Rückstellschaltung zum Zurücksetzen des Pilotstromsollwertes bzw. des zweiten Signals von dem erhöhten Wert auf den voreingestellten Wert nach einer voreingestellten Zeit, während der der Pilotlichtbogen nicht in einen Arbeitslichtbogen überschlägt.

10. Schaltungsanordnung nach Anspruch 9, **dadurch gekennzeichnet, daß** die zweite Rückstellschaltung das Wellenformschaltelement (200) zurücksetzt, wenn nach einer voreingestellten Zeit nach Auslösen des Schaltsignals der Pilotlichtbogen nicht in einen Arbeitslichtbogen übergesprungen ist.

11. Schaltungsanordnung nach Anspruch 3 oder Anspruch 3 und einem der Ansprüche 4 bis 10, **dadurch gekennzeichnet, daß** das vorgegebene Profil (360) rampenförmig ist.

12. Schaltungsanordnung nach Anspruch 11, **dadurch gekennzeichnet, daß** das rampenförmige Profil (360) geradlinig ansteigt.

13. Schaltungsanordnung nach Anspruch 3 oder Anspruch 3 und einem der Ansprüche 4 bis 12, **dadurch gekennzeichnet, daß** das vorgegebene Profil mehrere Abschnitte und/oder Stufen aufweist.

14. Schaltungsanordnung nach Anspruch 3 oder Anspruch 3 und einem der Ansprüche 4 bis 11, **dadurch gekennzeichnet, daß** das vorgegebene Profil eine konkave Kurve (402) bildet.

15. Schaltungsanordnung nach Anspruch 3 oder Anspruch 3 und einem der Ansprüche 4 bis 11, **dadurch gekennzeichnet, daß** das vorgegebene Profil eine konvexe Kurve (400) bildet.

16. Schaltungsanordnung nach Anspruch 3 oder Anspruch 3 und einem der Ansprüche 4 bis 15, **dadurch gekennzeichnet, daß** das vorgegebene Profil nach einer zeitkonstanten Funktion ausgebildet ist.

17. Schaltungsanordnung nach Anspruch 3 oder Anspruch 3 und einem der Ansprüche 4 bis 13, **dadurch gekennzeichnet, daß** das vorgegebene Profil nach Art einer Schrittfunktion ausgebildet ist.

18. Verfahren zum Zuführen eines Gleichstroms von einer regelbaren Stromversorgung zu einer Plasmaeinrichtung, deren Elektrode durch eine Öffnung in eine Düse auf ein davor angeordnetes Werkstück ausrichtbar ist, unter Verwendung einer Schaltung mit einem ersten Schaltungszweig zum Erzeugen eines Pilotlichtbogens zwischen der Elektrode und der Düse und mit einem zweiten Schaltungszweig zum Erzeugen eines Arbeitslichtbogens zwischen der Elektrode und dem Werkstück, mit folgenden Verfahrensschritten:
a) Abtasten des im zweiten Schaltungszweig (50) über das Werkstück (30) fließenden Werkstückstroms (I_{W}) ;
b) Öffnen des ersten Schaltungszweigs (40), wenn der abgetastete Werkstückstrom (I_{W}) einen voreingestellten Überschlagstrom übersteigt zum Überführen des Pilotlichtbogens (P) in den Plasma-Arbeitslichtbogen (T);
c) Regeln des Stroms im ersten Schaltungszweig (40) bis zum Zeitpunkt des Lichtbogenüberschlags; wozu
d) ein erstes Signal mit einer Signalstärke erzeugt wird, die ein Maß für den Momentanstrom darstellt, der dem ersten Schaltungszweig (40) von der Stromversorgung (10) zugeführt wird;
e) ein zweites Signal mit einer Signalstärke erzeugt wird, die ein Maß für den Sollwert des Stroms im ersten Schaltungszweig (40) ist;
f) das erste und das zweite Signal miteinander verglichen werden und hieraus ein Eingangssignal als Stellwert für den Regeleingang (16) der Stromversorgung (10) ermittelt wird, um den Momentanstrom im ersten Schaltungszweig auf den gewünschten Strom hin einzustellen;
g) Erzeugen eines Auslösesignals zu einem Zeitpunkt, in dem der abgetastete Werkstückstrom (I_{W}) über einen niedrigen Schwellenstrom ansteigt, wobei der Schwellenstrom kleiner ist als der voreingestellte Überschlagstrom;
**gekennzeichnet durch** folgende Verfahrensschritte:
h) Erzeugen eines Zeitbasissignals mit nach einem vorgegebenen Profil ansteigendem Niveau in Reaktion auf das Auslösesignal; und
i) Hinzufügen des Zeitbasissignals zu dem zweiten Signal, um dessen Signalstärke nach dem vorgegebenen Profil zu vergrößern und somit den Momentanstrom anzuheben, der dem ersten Schaltungszweig von der Stromversorgung zugeführt wird.

19. Verfahren nach Anspruch 18, **dadurch gekennzeichnet, daß** der voreingestellte Überschlagstrom auf einen Wert eingestellt wird, der größer als 150 mA ist.

20. Verfahren nach Ansprüchen 18 oder 19, **dadurch gekennzeichnet, daß** der voreingestellte Überschlagstrom auf einen Wert zwischen 150 mA und 3A eingestellt wird.

21. Verfahren nach einem der Ansprüche 18 bis 20, **dadurch gekennzeichnet, daß** der niedrige Schwellenstrom auf einen Wert unter 100 mA eingestellt wird.

22. Verfahren nach einem der Ansprüche 18 bis 21, **dadurch gekennzeichnet, daß** der niedrige Schwellenstrom auf einen Wert zwischen 20 mA und 80 mA eingestellt wird.

23. Verfahren nach einem der Ansprüche 18 bis 22, **dadurch gekennzeichnet, daß** die Erzeugung des Zeitbasissignals beendet wird, wenn der Pilotlichtbogen in den Arbeitslichtbogen übergeht.

24. Verfahren nach einem der Ansprüche 18 bis 23, **dadurch gekennzeichnet, daß** die Erzeugung des Zeitbasissignals beendet wird, wenn nach Ablauf eines vorgegebenen Zeitintervalls nach Erzeugung des Auslösesignals kein Lichtbogenüberschlag vom Pilotlichtbogen in den Arbeitslichtbogen während des Zeitintervalls stattfindet.

## Claims

1. Circuit arrangement for a plasma arc device (20) with an electrode (22) adapted to be positioned in relation to a workpiece (30) and with a torch throat (24) surrounding said electrode, with a controllable power supply (10), a measuring device for determining the workpiece current (I_{w}) flowing over the workpiece (30), a controller for adjusting to a preset nominal pilot current the pilot current (Iₚ) flowing via a pilot arc (P) in a pilot phase between the electrode and the throat, and with a switchover device for opening the pilot arc current branch circuit (40) if the workpiece current (I_{w}) exceeds a given, preset arc-over value, **characterised by** a switching device (200) for increasing the nominal pilot current and adjusting the current supply (10) to a higher pilot current, the switching device being acted upon by the measuring device for the workpiece current (I_{w}) and activated whenever a low threshold current level is exceeded.

2. Circuit arrangement according to claim 1, **characterised in that** the current supply (10) is connected to the arc device (20) via a controlling and regulating circuit (B), the circuit (B) incorporating the pilot arc current branch circuit (40) for generating the pilot arc (P) between the electrode (22) and the throat (24), along with a second circuit branch (50) for generating a working arc (T) between the electrode (22) and the workpiece (30), there being provided in the second branch circuit (50) said measuring device (52) for ascertaining the workpiece current (I_{w}) and switching means (56, 58, 44) for opening the first branch circuit (40) if the workpiece current (I_{w}) increases beyond a preset switching current (60, 60'), so as to convert the pilot arc (P) into the working arc (T), and featuring an arrangement for regulating the current in the first branch circuit (40) until the transfer of the pilot arc into the working arc, the current regulating arrangement incorporating means (110) for generating a first signal representing the instantaneous current in the first branch circuit (40), along with means (150, 152) for generating the nominal pilot current for the desired current in the first branch circuit (40) and further incorporating a comparator (100) which compares the two signals with one another and sends to the current regulating input (16) of the current supply (10) a final control signal (102) with the aid of which the instantaneous current (I_{R}) is set at the desired current, the nominal pilot current having a preset value, and in said switching device (200) for increasing the nominal pilot current there being provided means for generating a transfer signal if the detected workpiece current (Iw) increases beyond the low threshold current value, which is smaller than the preset switching current (60'), and there being provided switching means (220) for increasing the nominal pilot current to a value above the preset value, in order to increase the instantaneous current sent from the current supply (10) to the first branch circuit (40) accordingly.

3. Circuit arrangement according to claim 1 or 2, **characterised by**
- a trip circuit (212, 214) for generating a switching signal if the workpiece current exceeds a low threshold current value that is smaller than the preset switching current (60');
- a waveform switching element (200) in said switching device for increasing the nominal pilot current so as to generate a time-base signal at a level that rises in accordance with a predetermined profile (360; 400-406) and is adapted to be triggered by the switching signal; and by
- a totalising device (220) for adding the time-base signal to the second signal, thereby incrementing the second signal by the time-base signal in accordance with the selected profile and thus increasing the instantaneous current sent to the first branch circuit (40).

4. Circuit arrangement according to any one of claims 1 to 3,
**characterised in that** the preset switching current is greater than 150 mA.

5. Circuit arrangement according to any one of claims 1 to 4,
**characterised in that** the preset switching current is between 0.15 and 3 A.

6. Circuit arrangement according to any one of claims 1 to 5,
**characterised in that** the low threshold current value is less than 100 mA.

7. Circuit arrangement according to any one of claims 1 to 6,
**characterised in that** the threshold current value is between 20 and 80 mA.

8. Circuit arrangement according to any one of claims 1 to 7,
**characterised by** a resetting circuit (44, R) for resetting the rated pilot current or second signal from the increased value to the preset value whenever the pilot arc changes to the working arc.

9. Circuit arrangement according to any one of claims 1 to 8,
**characterised by** a second resetting circuit for resetting the nominal pilot current or second signal from the increased value to the preset value after a preset period during which the pilot arc does not flash over into a working arc.

10. Circuit arrangement according to claim 9, **characterised in that** the second resetting circuit resets the waveform switching element (200) if the pilot arc has not sparked over into a working arc after a preset period following the triggering of the switching signal.

11. Circuit arrangement according to claim 3 or claim 3 and any one of claims 4 to 10, **characterised in that** the stipulated profile (360) is ramp-shaped.

12. Circuit arrangement according to claim 11, **characterised in that** the ramp-shaped profile (360) rises in a straight line.

13. Circuit arrangement according to claim 3 or claim 3 and any one of claims 4 to 12, **characterised in that** the stipulated profile features a plurality of sections and/or steps.

14. Circuit arrangement according to claim 3 or claim 3 and any one of claims 4 to 11, **characterised in that** the stipulated profile forms a concave curve (402).

15. Circuit arrangement according to claim 3 or claim 3 and any one of claims 4 to 11, **characterised in that** the stipulated profile forms a convex curve (400).

16. Circuit arrangement according to claim 3 or claim 3 and any one of claims 4 to 15, **characterised in that** the stipulated profile is configured according to a time-constant function.

17. Circuit arrangement according to claim 3 or claim 3 and any one of claims 4 to 13, **characterised in that** the stipulated profile is configured in the manner of a step function.

18. Method for sending a direct current from a controllable current supply to a plasma device whose electrode can be aligned, through an opening in a throat, with a workpiece arranged in front thereof, using a circuit with a first branch circuit for generating a pilot arc between the electrode and the throat and with a second branch circuit for generating a working arc between the electrode and the workpiece, the method comprising the following steps:
a) scanning the workpiece current (I_{w}) flowing over the workpiece (30) in the second branch circuit (50);
b) opening the first branch circuit (40) whenever the scanned workpiece current (I_{w}) exceeds a preset arcing current to convert the pilot arc (P) into the plasma working arc (T);
c) regulating the current in the first branch circuit (40) until the instant of arc-over; to which end
d) a first signal is generated at a signal strength that constitutes a measure of the instantaneous current which is sent to the first branch circuit (40) from the current supply (10);
e) a second signal is generated at a signal strength that is representative of the setpoint value of the current in the first branch circuit (40);
f) the first signal and second signal are compared with one another and the result is used to determine an input signal as final control value for the controlling input (16) of the current supply (10), in order to adjust the instantaneous current in the first branch circuit to the desired current;
g) generation of a trip signal at an instant at which the scanned workpiece current (I_{w}) increases beyond a low threshold current, the threshold current being smaller than the preset arc-over current;
**characterised by** the following steps:
h) generating a time-base signal at a level that rises according to a stipulated profile in response to the trip signal; and
i) adding the time-base signal to the second signal in order to increase the signal strength thereof according to the stipulated profile and thus increase the instantaneous current that is sent to the first branch circuit from the current supply.

19. Method according to claim 18, **characterised in that** the preset arc-over current is adjusted to a value greater than 150 mA.

20. Method according to claims 18 or 19, **characterised in that** the preset arc-over current is adjusted to a value between 150 mA and 3A.

21. Method according to any one of claims 18 to 20, **characterised in that** the low threshold current is adjusted to a value below 100 mA.

22. Method according to any one of claims 18 to 21, **characterised in that** the low threshold current is adjusted to a value between 20 mA and 80 mA.

23. Method according to any one of claims 18 to 22, **characterised in that** the generation of the time-base signal is terminated if the pilot arc changes to the working arc.

24. Method according to any one of claims 18 to 23, **characterised in that** the generation of the time-base signal is terminated if after a stipulated time interval has elapsed after generating the trip signal no arc-over from the pilot art to the working arc takes place during the time interval.

## Revendications

1. Agencement de circuit pour un dispositif à arc-plasma (20) comprenant une électrode (22) qui peut être positionnée par rapport à une pièce d'oeuvre (30), et un bec de brûleur (24) entourant l'électrode, l'agencement comprenant une alimentation en courant (10) régulable, un dispositif de mesure pour déterminer le courant de pièce (I_{w}) traversant la pièce d'oeuvre (30), un dispositif régulateur pour régler à une consigne de courant pilote préajustée le courant pilote (Iₚ) passant par un arc pilote (P) entre l'électrode et le bec dans une phase pilote, ainsi qu'un dispositif de commutation pour ouvrir la branche de courant d'arc pilote (40) lorsque le courant de pièce (I_{w}) dépasse une valeur d'amorçage déterminée, préajustée, **caractérisé par** un circuit (200) sur lequel agit le dispositif de mesure pour le courant de pièce (I_{w}) et qui est activé en cas de dépassement d'un seuil bas de courant, pour accroître la consigne de courant pilote et régler l'alimentation en courant (10) à un courant pilote plus élevé.

2. Agencement de circuit selon la revendication 1, **caractérisé en ce que** l'alimentation en courant (10) est reliée avec le dispositif d'arc-plasma (20) par l'intermédiaire d'un circuit de commande et régulation (B), qui comprend la branche de courant d'arc pilote (40) pour produire l'arc pilote (P) entre électrode (22) et bec (24) ainsi qu'une deuxième branche de circuit (50) pour produire un arc de travail (T) entre électrode (22) et pièce d'oeuvre (30), la deuxième branche de circuit (50) comprenant le dispositif de mesure précité (52) pour déterminer le courant de pièce (I_{w}) et des moyens de commutation (56, 58, 44) pour ouvrir la première branche de circuit (40) lorsque le courant de pièce (I_{w}) dépasse un courant de commutation (60, 60') préajusté pour transférer l'arc pilote (P) dans l'arc de travail (T), et avec un agencement pour réguler le courant dans la première branche de circuit (40) jusqu'au passage de l'arc pilote dans l'arc de travail, **en ce que** l'agencement de régulation de courant comprend des moyens (110) pour produire un premier signal représentant le courant instantané dans la première branche de circuit (40), des moyens (150, 152) pour produire la consigne de courant pilote pour le courant désiré dans la première branche de circuit (40), et un comparateur (100) qui compare les deux signaux entre eux et fournit à l'entrée de régulation de courant (16) de l'alimentation en courant (10) un signal de réglage (102) à l'aide duquel le courant instantané (I_{R}) est régulé à la valeur de courant désirée, **en ce que** la consigne de courant pilote a une valeur préajustée, et **en ce que** dans le circuit précité (200) pour augmenter la consigne de courant pilote, il est prévu des moyens pour produire un signal de transfert lorsque le courant de pièce (I_{w}) mesuré dépasse le seuil bas de courant, qui est inférieur au courant de commutation préajusté (60'), et **en ce qu'**il est prévu des moyens de circuit (220) pour augmenter la consigne de courant pilote jusqu'à une valeur supérieure à la valeur préajustée pour augmenter de façon correspondante le courant instantané que l'alimentation en courant (10) fournit à la première branche de circuit (40).

3. Agencement de circuit selon la revendication 1 ou 2, **caractérisé par** :
- un circuit de déclenchement (212, 214) pour produire un signal de commutation lorsque le courant de pièce dépasse un seuil bas de courant, plus faible que le courant de commutation préajusté (60') ;
- dans le circuit précité pour augmenter la consigne de courant pilote, un élément de circuit à forme d'onde (200) pour produire un signal de base de temps avec un niveau croissant conformément à un profil prédéterminé (360 ; 400-406), qui peut être déclenché par le signal de commutation ; et par
- un dispositif additionneur (220) pour additionner le signal de base de temps au second signal, de sorte que le second signal est augmenté du signal de base de temps en correspondance avec le profil choisi, et ainsi le courant instantané fourni à la première branche de circuit (40) est augmenté.

4. Agencement de circuit selon l'une des revendications 1 à 3, **caractérisé en ce que** le courant de commutation préajusté est supérieur à 150 mA.

5. Agencement de circuit selon l'une des revendications 1 à 4, **caractérisé en ce que** le courant de commutation préajusté est compris entre 0, 15 et 3 A. ,

6. Agencement de circuit selon l'une des revendications 1 à 5, **caractérisé en ce que** le seuil bas de courant est inférieur à 100 mA.

7. Agencement de circuit selon l'une des revendications 1 à 6, **caractérisé en ce que** le seuil de courant est compris entre 20 et 80 mA.

8. Agencement de circuit selon l'une des revendications 1 à 7, **caractérisé par** un circuit de réinitialisation (44, R) pour réinitialiser la consigne de courant pilote, respectivement le second signal, de la valeur accrue à la valeur préajustée, lorsque l'arc pilote se transforme en arc de travail.

9. Agencement de circuit selon l'une des revendications 1 à 8, **caractérisé par** un deuxième circuit de réinitialisation pour réinitialiser le seuil de courant pilote, respectivement le second signal, de la valeur accrue à la valeur préajustée après un temps préajusté, pendant lequel l'arc pilote ne s'amorce pas en arc de travail.

10. Agencement de circuit selon la revendication 9, **caractérisé en ce que** le second circuit de réinitialisation réinitialise l'élément de circuit à forme d'onde (200) lorsqu'après un temps préajusté après déclenchement du signal de commutation l'arc pilote n'a pas basculé en arc de travail.

11. Agencement de circuit selon la revendication 3, ou selon la revendication 3 et l'une des revendications 4-10, **caractérisé en ce que** le profil prédéterminé (360) est en forme de rampe.

12. Agencement de circuit selon la revendication 11, **caractérisé en ce que** le profil en forme de rampe (360) croît linéairement.

13. Agencement de circuit selon la revendication 3, ou selon la revendication 3 et l'une des revendications 4-12, **caractérisé en ce que** le profil prédéterminé (360) présente plusieurs tronçons et/ou gradins.

14. Agencement de circuit selon la revendication 3, ou selon la revendication 3 et l'une des revendications 4-11, **caractérisé en ce que** le profil prédéterminé constitue une courbe concave (402).

15. Agencement de circuit selon la revendication 3, ou selon la revendication 3 et l'une des revendications 4-11, **caractérisé en ce que** le profil prédéterminé constitue une courbe convexe (400).

16. Agencement de circuit selon la revendication 3, ou selon la revendication 3 et l'une des revendications 4-15, **caractérisé en ce que** le profil prédéterminé est construit d'après une fonction constante dans le temps.

17. Agencement de circuit selon la revendication 3, ou selon la revendication 3 et l'une des revendications 4-13, **caractérisé en ce que** le profil prédéterminé est construit à la manière d'une fonction échelon.

18. Procédé pour fournir un courant continu d'une alimentation en courant régulable à un dispositif à plasma, dont l'électrode peut à travers une ouverture dans un bec être orientée vers une pièce d'oeuvre placée devant, en utilisant un circuit comprenant une première branche de circuit pour produire un arc pilote entre l'électrode et le bec et une deuxième branche de circuit pour produire un arc de travail entre l'électrode et la pièce d'oeuvre, comprenant les étapes suivantes :
a) Explorer le courant de pièce (I_{w}) circulant dans la deuxième branche de circuit (50) par la pièce d'oeuvre (30) ;
b) Ouvrir la première branche de circuit (40) lorsque le courant de pièce (I_{w}) exploré dépasse un courant d'amorçage préajusté, pour transférer l'arc pilote (P) dans l'arc-plasma de travail (T) ;
c) Réguler le courant dans la première branche de circuit (40) jusqu'à l'instant de l'amorçage de l'arc ; et pour cela :
d) on produit un premier signal avec un niveau de signal qui représente une mesure du courant instantané qui est fourni par l'alimentation en courant (10) à la première branche de circuit (40) ;
e) on produit un deuxième signal avec un niveau de signal qui est une mesure de la consigne de courant dans la première branche de circuit (40) ;
f) on compare l'un avec l'autre le premier et le deuxième signal et on en tire un signal d'entrée en tant que valeur de réglage pour l'entrée de régulation (16) de l'alimentation en courant (10), pour ajuster à la valeur de courant désirée le courant instantané dans la première branche de circuit ;
g) Produire un signal de déclenchement à un instant où le courant de pièce (I_{w}) exploré dépasse un seuil bas de courant, inférieur au courant d'amorçage préajusté ;
**caractérisé par** les étapes suivantes :
h) Produire un signal de base de temps avec un niveau croissant selon un profil préétabli, en réaction au signal de déclenchement ; et
i) Ajouter le signal de base de temps au deuxième signal pour augmenter son niveau de signal selon le profil préétabli et ainsi faire monter le signal instantané qui est fourni par l'alimentation en courant à la première branche de circuit.

19. Procédé selon la revendication 18, **caractérisé en ce que** qu'on ajuste à une valeur supérieure à 150 mA le courant d'amorçage préajusté.

20. Procédé selon la revendication 18 ou 19, **caractérisé en ce qu'**on ajuste à une valeur comprise entre 150 mA et 3 A le courant d'amorçage préajusté.

21. Procédé selon l'une des revendications 18 à 20, **caractérisé en ce qu'**on ajuste le seuil bas de courant à une valeur inférieure à 100 mA.

22. Procédé selon l'une des revendications 18 à 21, **caractérisé en ce qu'**on ajuste le seuil bas de courant à une valeur comprise entre 20 mA et 80 mA.

23. Procédé selon l'une des revendications 18 à 22, **caractérisé en ce qu'**on cesse de produire le signal de base de temps lorsque l'arc pilote passe dans l'arc de travail.

24. Procédé selon l'une des revendications 18 à 23, **caractérisé en ce qu'**on cesse de produire le signal de base de temps lorsqu'après écoulement d'un intervalle de temps préajusté après production du signal de déclenchement il ne se produit aucun amorçage d'arc de l'arc pilote en arc de travail pendant l'intervalle de temps.
